# EUROPEAN PATENT APPLICATION

(11) **EP 1 429 471 A1**
(43) Date of publication of application: **16.06.2004**
(21) Application number: 01967732.7
(22) Date of filing: 19.09.2001
(51) Int. Cl.: H04B 5/00

(54) **COMMUNICATION SYSTEM USING LEAKAGE TRANSMISSION LINE**

(71) Applicant: MITSUBISHI DENKI KABUSHIKI KAISHA, Tokyo 100-8310 (JP); Central Japan Railway Company, Nagoya-shi, Aichi 450-0002 (JP)
(72) Inventor: TAMIYA, Norihiro, c/o MITSUBISHI DENKI K. K., Tokyo 100-8310 (JP); FUKAE, Tadamasa, c/o MITSUBISHI DENKI K. K., Tokyo 100-8310 (JP); MORIHARA, Kenji, c/o MITSUBISHI DENKI KABUSHIKI K., Tokyo 100-8310 (JP); KAWAKAMI, Takashi, c/o CENTRAL JAPAN RAILWAY CO., Nagoya-shi, Aichi 450-0002 (JP)
(74) Representative: Meissner, Bolte & Partner
(86) International application number: PCT/JP2001/008150
(87) International publication number: WO 2003/028243

(57) **Abstract**

A communication system using a leakage transmission path (3A and 3B), for sending and receiving signals lying within a passband, which the leakage transmission path essentially has as a conductive line, is provided with a signal generation means (4) for generating a signal to be transmitted by way of the leakage transmission path, and a relay means (2) disposed on a way of the leakage transmission path, for relaying the signal from the generation means, and for converting the signal applied, via a cable, thereto into a signal lying within the passband, which the leakage transmission path essentially has, so as to send out it.

## Description

### Field of the Invention

The present invention relates to a communication system that uses a leakage transmission path, such as a leakage coaxial cable or a leakage wave guide. More particularly, it relates to a communication system that utilizes a passband, which the leakage transmission path essentially has as a conductive line, for transmission of signals.

### Background of the Invention

In order to ensure train (or vehicle) operations and to prevent accidents in transportation by rail or road, it is necessary to promptly find an abnormality on railway tracks or roads and notify it to a predetermined control office. There has been provided a communication system that sends a guard alarm signal indicating such an abnormality to a predetermined control office by way of a leakage transmission path disposed on railway tracks or roads, such as a leakage coaxial cable or a leakage wave guide. In this specification, leakage coaxial cables (referred to as LCXs from here on) are conceptually defined so that they include leakage wave guides because leakage coaxial cables fundamentally have the same structure as leakage wave guides.

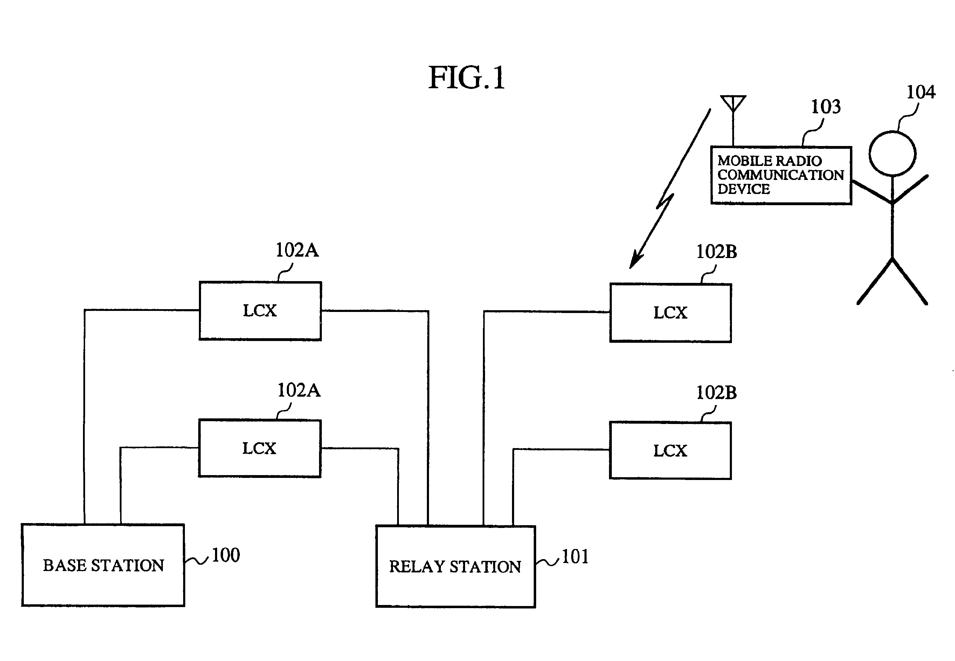

Fig. 1 is a diagram schematically showing the structure of a prior art communication system that uses a leakage transmission path, as disclosed in Japanese patent application publication No. (TOKKAIHEI) No. 5-22207, for example. In the figure, reference numeral 100 denotes a base station disposed at one end of LCX 102A, for sending and receiving train-to-ground radio signals that are transmitted by radio between trains and ground by way of LCXs 102A and 102B, for receiving a guard alarm signal sent thereto and lying within a frequency band through which those train-to-ground radio signals are transmitted, and for notifying a control office not shown in the figure of the reception of the guard alarm signal, and reference numeral 101 denotes a relay station disposed between LCX 102A and LCX 102B, for relaying the train-to-ground radio signals, for receiving the guard alarm signal sent from a mobile radio communication device 103 by way of LCX 102B, and for converting the guard alarm signal into a signal lying within the frequency band, through which train-to-ground radio signals are transmitted, by adding an identification signal to the guard alarm signal so as to transmit the guard alarm signal to the base station 100. LCXs 102A and 102B are transmission paths via which train-to-ground radio signals are transmitted and are disposed on roads or railway tracks. Each of them consists of a transmission LCX via which detection signals are leaked and radiated, and a reception LCX that is disposed opposite to the transmission LCX, for receiving detection signals. The mobile radio communication device 103 that is owned by a maintenance member 104 sends out the guard alarm signal notifying an abnormality that occurs in roads or railway tracks.

Next, a description will be made as to an operation of the prior art communication system.

First of all, when the track maintenance member 104 goes round roads or railway tracks and finds a trouble, he or she starts up the mobile radio communication device 103 so that it can send out a guard alarm signal lying within a voice frequency band. This guard alarm signal is coupled with LCX 102B and is then delivered to the relay station 101. The relay station 101 mixes the guard alarm signal received via LCX 102B and a modulation wave modulated with an identification signal used for identifying the guard alarm signal so as to convert the guard alarm signal into a signal lying within the frequency band through which train-to-ground radio signals are transmitted.

The signal lying within the frequency band through which train-to-ground radio signals are transmitted is relayed and amplified by a relay amplifier, not shown in the figure, within the relay station 101, and is sent onto LCX 102A disposed on a downward side of the relay station 101. The signal then propagates through LCX 102A and is received by the base station 100. The base station 100 recognizes the abnormality or the like that is caused on railway tracks or roads from the guard alarm signal received via LCX 102A, and notifies the control office not shown in the figure of the reception of the guard alarm signal.

A problem encountered with the prior art communication system using a leakage transmission path constructed as mentioned above is that there is a possibility that because the prior art communication system sends signals to the base station 100 by radio by using the mobile radio communication device 103, the prior art communication system is under the influence of fading caused by reflection of radio waves by geographical features, structures and so on in surroundings of the mobile radio communication device 103, and therefore those signals may not be accurately transmitted to the base station 100 due to deterioration in the communication quality caused by the fading.

On the other hand, in recent years, besides periodical checking of roads or railroad tracks by maintenance members, construction of systems for checking to see whether or not there is an abnormality from video signals obtained by monitoring cameras for always monitoring roads or railway tracks has been requested.

Another problem with the prior art communication system is however that because the system uses signals lying within a narrow voice frequency band, such as a band of 10 kHz or less (for example, a so-called 4 kHz band ranging from 300 Hz to 3.4 kHz), as signals indicating notifications by using the mobile radio communication device 103, the prior art communication system cannot communicate video signals generally having a large volume of information and lying within a wide band of up to about 6 MHz (for example, 4 MHz).

A further problem with the prior art communication system is that because it converts signals indicating notifications into signals lying within a frequency band used for train-to-ground radio communications, which are to be transmitted over LCXs 102A and 102B, problems arise when video signals obtained by monitoring cameras arranged above roads or railway tracks are used for checking to see whether or not there is an abnormality. In other words, the prior art communication system cannot transmit information from many monitoring points because the number of channels via which signals can be transmitted over frequency bands used for train-to-ground radio communications is limited in consideration of the band width (about 6 MHz) which the video signals have.

In addition, an obstacle detection system for detecting obstacles on roads or railway tracks, as well as the above-mentioned train-to-ground radio communication system, uses the leakage transmission path as a radiation path via which detection signals are transmitted. A VHF or UHF band is generally used as the frequency band for this radiation path. When taking, as an example, LCX that uses a frequency range of 400 MHz, it has an applicable frequency range from 400 MHz to 470 MHz. In other words, the frequency band that can be used for transmission of signals indicating notifications or the like is about 70 MHz. Therefore, problems can arise when combining a system for sending and receiving wideband signals, such as a monitoring system for sending and receiving video signals from monitoring cameras, with the train-to-ground radio communication system or the obstacle detection system, which uses the leakage transmission path as a signal transmission medium. In other words, there is a possibility that it is impossible to transmit signals from the different systems at the same time and interference among signals transmitted between systems occurs in the narrow frequency band used for train-to-ground radio communications and in the applicable frequency band used for radiation paths.

The present invention is proposed to solve the above-mentioned problems, and it is therefore an object of the present invention to provide a communication system using a leakage transmission path capable of transmitting wideband signals via multiple channels by using a passband which the leakage transmission path essentially has as a conductive line for transmission of signals, thereby unerringly transmitting signals with accuracy.

### Disclosure of the Invention

In accordance with the present invention, there is provided a communication system using a leakage transmission path, for sending and receiving signals lying within a passband, which a leakage transmission path essentially has as a conductive line, the system including a signal generation means for generating a signal to be transmitted by way of the leakage transmission path, and a relay means disposed on a way of the leakage transmission path, for relaying the signal from the generation means, and for converting the signal applied, via a cable, thereto into a signal lying within the passband, which the leakage transmission path essentially has, so as to send out it. As a result, the communication system can implement accurate wideband signal transmissions without being under the influence of surrounding environments.

In the communication system using the leakage transmission path in accordance with the present invention, the signal generation means is an imaging device for generating a video signal. As a result, the communication system can transmit the video signal.

In the communication system using the leakage transmission path in accordance with the present invention, the signal generation means generates signals respectively lying within a plurality of frequency bands and the relay means converts those signals respectively lying within the plurality of frequency bands into signals so that they have frequencies that are separately arranged in the passband which the leakage transmission path has. As a result, the communication system can implement signal transmissions via multiple channels by using the leakage transmission path.

In accordance with the present invention, there is provided a system using a leakage transmission path for transmission of signals and having a plurality of communication systems including a communication system using the leakage transmission path, for sending and receiving signals lying within a passband, which the leakage transmission path essentially has as a conductive line, the plurality of communication systems generating and transmitting signals respectively lying within different frequency bands, characterized in that the communication system comprises a signal generation means for generating a signal to be transmitted by way of the leakage transmission path; and a relay means disposed on a way of the leakage transmission path, for relaying the signal from the generation means, and for converting the signal applied, via a cable, thereto into a signal lying within the passband, which the leakage transmission path essentially has, so as to send out it, and each of the plurality of communication systems except the communication system includes a relay means for relaying signals transmitted via the leakage transmission path. As a result, the system can transmit signals associated with the plurality of communication systems.

In the system using the leakage transmission path in accordance with the present invention, the relay means included in each of the plurality of communication systems separates or combines a signal lying within a frequency band which each of the plurality of communication systems uses from or with a signal transmitted via the leakage transmission path. As a result, the system can prevent interference among the plurality of communication systems.

### Brief Description of the Figures

Fig. 1 is a diagram schematically showing the structure of a prior art communication system that uses a leakage transmission path;
Fig. 2 is a diagram schematically showing the structure of a communication system that uses a leakage transmission path in accordance with embodiment 1 of the present invention;
Fig. 3 is a diagram showing a relationship between a passband and frequency bands through which transmission signals are transmitted, in the communication system according to embodiment 1 of the present invention; and
Fig. 4 is a diagram schematically showing the structure of a communication system that uses a leakage transmission path in accordance with embodiment 2 of the present invention.

### Preferred Embodiments of the Invention

In order to explain the present invention in greater detail, the preferred embodiments will be described below with reference to the accompanying figures.

### Embodiment 1.

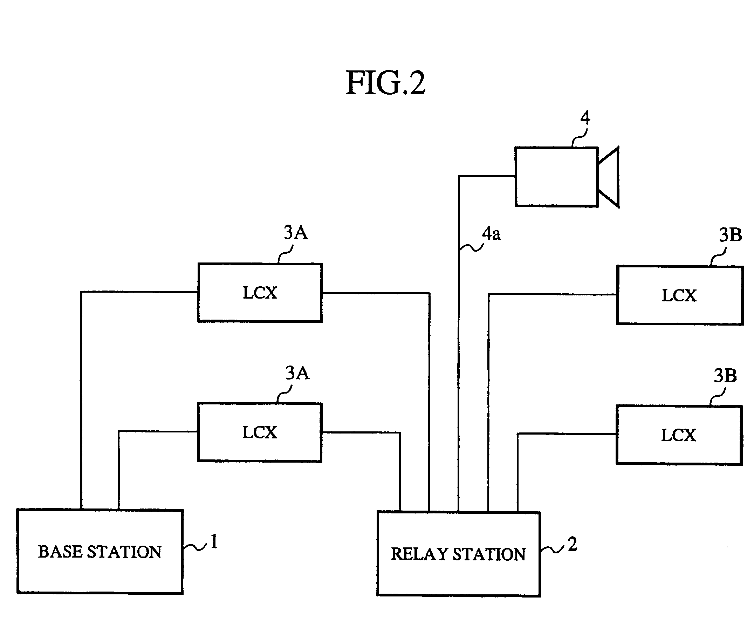

Fig. 2 is a diagram schematically showing the structure of a communication system that uses a leakage transmission path in accordance with embodiment 1 of the present invention. In the figure, reference numeral 1 denotes a base station disposed at one end of LCX 3A, for sending and receiving signals generated by a wideband signal generation means 4 by way of a coaxial cable 4a, a relay station 2, and LCX 3A. The relay station 2 disposed between LCX 3A and LCX 3B, for, when a relay means not shown in the figure accepts a signal generated by the wideband signal generation means 4 by way of the coaxial cable 4a, converting the signal into a signal lying within a passband, which LCXs 3A and 3B essentially have as conductive lines, and sending the signal lying within the passband to the base station 1.

Each of LCXs (leakage transmission paths) 3A and 3B serves as a transmission path via which signals generated by the wideband signal generation means 4 are transmitted, is basically a coaxial cable having a shield provided with a plurality of slits, and is generally used as a radiation path via which electric waves associated with detection signals used for detection of obstacles on roads or railway tracks are transmitted. The wideband signal generation means 4 is connected with the relay station 2 by way of the coaxial cable 4a, and generates signals having a band width that is wider than those of train-to-ground radio signals. In the example shown in the figure, the wideband signal generation means 4 is a camera for monitoring whether or not there is an obstacle or abnormality on a target road or target railway tracks by producing a video image of the target road or target railway tracks, and the signal having a band width that is wider than those of train-to-ground radio signals is a video signal representing the video image of the target to be monitored. The coaxial cable 4a connects the relay station 2 with the monitoring camera that is the wideband signal generation means 4, and is used as a cable transmission path via which the video signal obtained by the monitoring camera is transmitted to the relay station 2.

Next, a description will be made as to an operation of the communication system using a leakage transmission path in accordance with embodiment 1 of the present invention.

First of all, the monitoring camera that is the wideband signal generation means 4 produces a video image of an area where LCX 3B is disposed on the target road or railway tracks. The acquired video signal is then delivered to the relay station 2 by way of the coaxial cable 4a.

Thus, in the communication system according to this embodiment 1, the signal generated by the wideband signal generation means 4 such as the monitoring camera is directly delivered to the relay station 2 without using radio communications. As a result, the signal generated by the wideband signal generation means 4 can be surely transmitted to the relay station 2 with its quality being maintained while it is never under the influence of fading caused by surrounding environments. Because the video signal is sent to the relay station 2 by way of the coaxial cable 4a, as a conductive line, having a passband that is wider than the frequency bands used for radio communications, signals having a large volume of information, such as the video signal, can also be easily communicated to the relay station.

When the video signal is input to the relay station 2, the relay means disposed in the relay station 2 not shown in the figure modulates a carrier of a specific frequency that falls within a passband, which LCXs 3A and 3B essentially have as coaxial cables which are conductive lines, with the video signal so as to generate a transmission signal.

Assuming that LCXs 3A and 3B are conductive lines via which signals are transmitted in coaxial cables, LCXs 3A and 3B essentially have a passband ranging from a direct current to a frequency at which losses due to transmission in the cables are acceptable. In other words, when each of them is a 400 MHz LCX having an applicable frequency band ranging from about 400 MHz to about 470 MHz as a radiation path, it can be used over a frequency band ranging from a direct current (0 Hz) to a frequency (i.e., the upper limit of the frequency at which the cable can be used as a radiation path, in this case about 470 MHz) at which losses due to transmission in the cable are acceptable. In this case, each of LCXs 3A and 3B has a frequency band of about 470 MHz.

Thus, in LCXs 3A and 3B which are originally used as radiation paths, only a narrow frequency band determined by radiation characteristics is used among the passband which the coaxial cables that are conductive lines essentially have.

Therefore the communication system according to this embodiment 1 can transmit signals over a wide frequency band by using a frequency band other than the frequency bands applicable in train-to-ground radio communications and radiation paths.

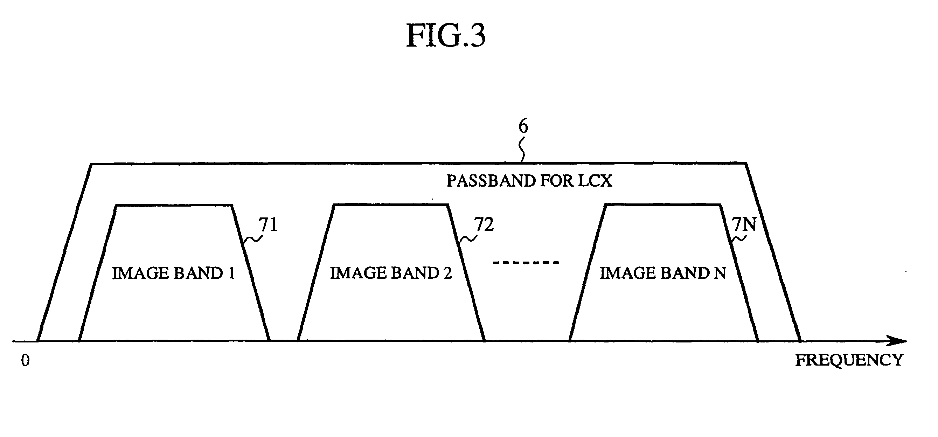

Fig. 3 is a diagram showing a relationship between the passband and frequency bands through which transmission signals are transmitted, in the communication system according to embodiment 1 of the present invention. In the figure, reference numeral 6 denotes the passband which each of LCXs 3A and 3B has, and which corresponds to a frequency range from a direct current to a frequency at which losses due to transmission in the cable are acceptable, for example, and reference numerals 71 to 7N denote frequency bands through which transmission signals associated with N video signals obtained by the monitoring camera are transmitted, and which are arranged separately in the passband 6.

The relay means within the relay station 2 that accepts the N video signals divides the passband 6 into N frequency bands so that they do not overlap one another, and then generates N carriers that correspond to the N frequency bands, respectively. The frequencies of these carriers are set to be equal to the centre frequencies of the N frequency bands that are separately arranged in the passband 6, respectively, for example.

The relay means within the relay station 2 then modulates the N carriers with the N video signals applied thereto from the monitoring camera, respectively, and generates N transmission signals 71 to 7N each having the same band width as the corresponding video signal at the centre frequency of the corresponding carrier.

Thus, by using the wide passband 6 which each of LCXs 3A and 3B has, the wideband video signals can be arranged in frequency within the passband 6 so that they do not overlap one another. In other words, the communication system can easily carry out signal transmissions via multiple channels. Concretely, when one LCX that uses a frequency range of 400 MHz is taken as an example, it has an applicable frequency range from 400 MHz to 470 MHz as a radiation path and has an available frequency band of about 70 MHz.

On the other hand, the communication system in accordance with embodiment 1 uses the passband which LCXs 3A and 3B essentially have as conductive lines. As a result, in the case of LCXs that use a frequency range of 400 MHz, the frequency range from 0 MHz to 470 MHz is available for transmission of signals and a frequency band of about 470 MHz is provided. In other words, as compared with the frequency band of 70 MHz when LCXs are used as radiation paths, the frequency band can be increased by about seven times when LCXs are used as conductive lines.

Assuming that each of the plurality of video signals has a band width of 6 MHz, the number of channels that can be set only with the video signals can be increased from about 11 channels (corresponding to a frequency band of 70 MHz and a band width of 6 MHz when LCXs serve as radiation paths) to about 78 channels (corresponding to a passband of 470 MHz and a band width 6 MHz).

Next, the relay means within the relay station 2 relays and amplifies the N transmission signals 71 to 7N that are generated as mentioned above and sends them onto LCX 3A.

The base station 1 receives the N transmission signals 71 to 7N associated with the video signals which propagate through LCX 3A and then can check to see whether or not there is an obstacle or abnormality on the target road or railway tracks from images produced by the monitoring camera.

As mentioned above, in accordance with this embodiment 1, because the relay means within the relay station 2 accepts wideband signals such as video signals generated by the wideband signal generation means 4 by way of the coaxial cable 4a, converts these signals into signals lying within a passband which LCXs essentially have as conductive lines, and then sends out them, the communication system can implement accurate wideband signal transmissions without being under the influence of surrounding environments.

In addition, in accordance with this embodiment 1, because the relay means within the relay station 2 converts signals respectively lying within a plurality of frequency bands into signals that are separately arranged in frequency within a passband 6 which LCXs have, the communication system can implement multiple-channel signal transmissions via LCXs.

### Embodiment 2.

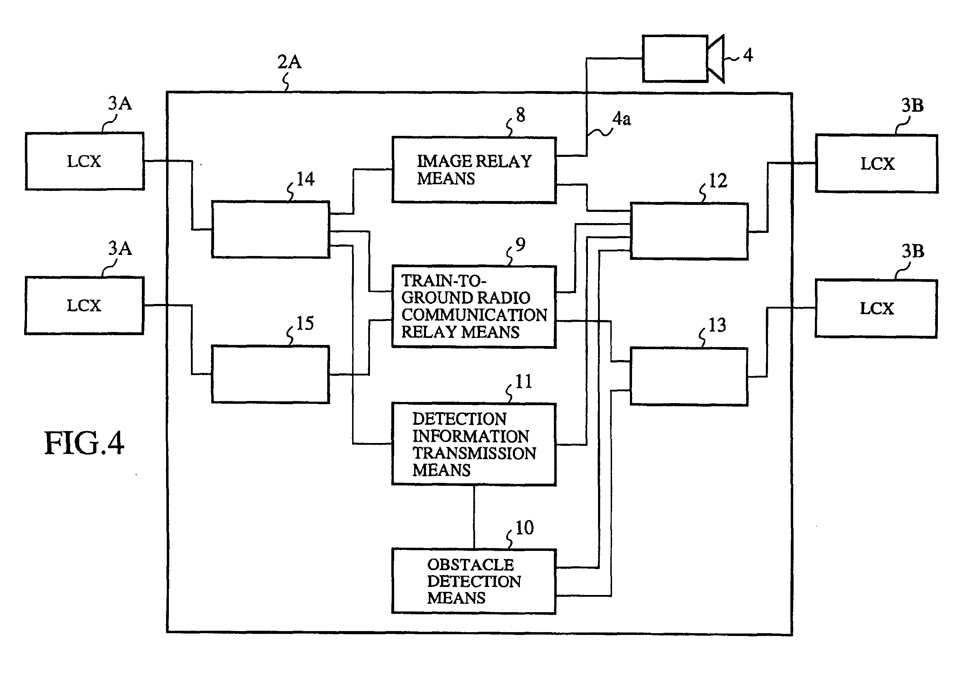

Fig. 4 is a diagram schematically showing the structure of a communication system that uses a leakage transmission path in accordance with embodiment 2 of the present invention. In the figure, reference numeral 2A denotes a relay station of the communication system according to this embodiment 2, which includes an image relay means 8, a train-to-ground radio communication relay means 9, an obstacle detection means 10, a detection information transmission means 11, and a plurality of signal separation and combination means 12 to 15. The image relay means 8 relays transmission of video signals that are wideband signals, converts the video signals into signals lying within a passband which LCXs 3A and 3B essentially have as conductive lines upon accepting the video signals obtained by a monitoring camera, which is a wideband signal generation means 4, by way of a coaxial cable 4a, and then sends them to a base station 1. In other words, a combination of this image relay means 8 and the signal separation and combination means 12 and 14 corresponds to the relay means of the relay station 2 described in above-mentioned embodiment 1, and a system that contains these components and LCXs 3A and 3B corresponds to the communication system of above-mentioned embodiment 1. The train-to-ground radio communication relay means 9 is included in a train-to-ground radio communication system which shares LCXs 3A and 3B as signal transmission media with the communication system that corresponds to that of above-mentioned embodiment 1, and relays train-to-ground radio signals which propagate through LCXs 3A and 3B. The train-to-ground radio communication system contains this train-to-ground radio communication relay means 9, the plurality of signal separation and combination means 12 to 15, and LCXs 3A and 3B.

The obstacle detection means 10 is included in an obstacle detection system which shares LCXs 3A and 3B as signal transmission media with the communication system that corresponds to that of above-mentioned embodiment 1, and can detect an obstacle that appears between LCX 3B for transmission of detection signals and LCX 3B for reception of detection signals. The detection information transmission means 11 can transmit detection information on detection of obstacles to the base station 1 by way of LCXs 3A and 3B, and can relay detection information from other obstacle detection means respectively disposed at relay points on LCXs, as well as detection information from the obstacle detection means 10 within the relay station 2A so as to transmit them to the base station 1. The obstacle detection system includes the obstacle detection means 10, the detection information transmission means 11, the plurality of signal separation and combination means 12 to 15, and LCXs 3A and 3B. Each of the signal separation and combination means 12 to 15 can extract a desired signal from a signal that propagates through LCX 3A or 3B, and can combine a desired signal with a transmission signal. Each of the signal separation and combination means 12 to 15 consists of a group of bandpass filters having respective passbands that correspond to the frequency bands which the plurality of systems use, respectively. Each of the signal separation and combination means 12 and 13 can direct an input signal applied thereto via corresponding LCX 3B toward a target one of the plurality of systems and extract a desired signal from the input signal directed toward the target system through a corresponding bandpass filter. Each of the signal separation and combination means 14 and 15 can combine signals from the plurality of systems with one another and send them into corresponding LCX 3A after excluding an unnecessary wave from each of the signals with a corresponding bandpass filter. In the figure, the same components as those of the communication system of Fig. 2 are designated by the same reference numerals, and therefore the explanation of those components will be omitted hereafter.

Next, a description will be made as to an operation of the communication system according to embodiment 2 of the present invention.

The monitoring camera that is the wideband signal generation means 4 produces a video image of an area where LCX 3B is disposed on a target road or railway tracks. An acquired video signal is then delivered to the image relay means 8 within the relay station 2A by way of the coaxial cable 4a. At this time, video signals from other monitoring cameras, which are separated from signals propagating through LCX 3B by the signal separation and combination means 12, as well as the video signal input from the monitoring camera that is the wideband signal generation means 4, are input to the image relay means 8. When these video signals are input to the image relay means 8, the image relay means 8 generates carriers corresponding to these video signals, respectively, these carriers having frequencies that fall within the passband that LCXs 3A and 3B essentially have as coaxial cables that are conductive lines, like the relay means of above-mentioned embodiment 1. The image relay means 8 then modulates those carriers with the input video signals, respectively, so as to generate transmission signals, and delivers these transmission signals to the signal separation and combination means 14 after adjusting their levels and amplifying them. The signal separation and combination means 14 combines these transmission signals with one another and sends them onto LCX 3A.

In the train-to-ground radio communication system, the signal separation and combination means 12 extracts train-to-ground radio signals from signals received via LCX 3B and delivers them to the train-to-ground radio communication relay means 9. When these train-to-ground radio signals are input, the train-to-ground radio relay communication means 9 generates carriers corresponding to these train-to-ground radio signals, respectively, these carriers having frequencies which fall within a frequency band used for train-to-ground radio communications. The train-to-ground radio relay means 9 then modulates the carriers with the input train-to-ground radio signals, respectively, so as to generate transmission signals. The train-to-ground radio communication relay means 9 delivers these transmission signals to the signal separation and combination means 14 and 15 after adjusting their levels and amplifying them. Each of the signal separation and combination means 14 and 15 combines these transmission signals with one another and sends them onto corresponding LCX 3A.

The obstacle detection means 10 furnishes an electric wave associated with the signal for detection to corresponding LCX 3B by way of the signal separation and combination means 12. LCX 3B radiates an electric wave associated with the signal for detection by way of the plurality of slits disposed in the shield thereof. This electric wave is received by other LCX 3B disposed opposite to above-mentioned LCX 3B by way of the slits of other LCX 3B. The received signal returns from other LCX 3B to the obstacle detection means 10 by way of the signal separation and combination means 13. Whether or not there is an obstacle between LCXs 3B can be determined by checking to see whether or not there is a change in the radio field intensity associated with the signal for detection, for example. Thus the detection information indicating that an obstacle is detected is sent to the detection information transmission means 11. The detection information from the obstacle detection means 10 and detection information that has transmitted via LCX 3B and is then separated by the signal separation and combination means 12 are input to the detection information transmission means 11. When these pieces of detection information are input, the detection information transmission means 11 generates carriers corresponding to the pieces of detection information, the carriers having frequencies that fall within a frequency band which the obstacle detection system uses. The detection information transmission means 11 then modulates the carriers with the signals associated with the pieces of detection informational, respectively, so as to generate transmission signals, and delivers these transmission signals to the signal separation and combination means 14 after adjusting their levels and amplifying them. The signal separation and combination means 14 combines these transmission signals with one another and sends them onto corresponding LCX 3A.

The above-mentioned system is based on the premise that the frequency bands within which signals handled by the plurality of systems that constitute the above-mentioned system are lying do not overlap one another. However, even if the passbands within which signals handled by the plurality of systems are lying are predetermined so that they do not overlap one another, the transmission signals might have a signal component outside their frequency bands and this results in becoming a cause of signal interference among the plurality of systems. Therefore, each of the plurality of bandpass filters that constitute the plurality of signal separation and combination means 12 to 15 needs to ensure that the transmission loss at its passband is equal to or less than a minimum loss acceptable by each system, and to ensure that its rejection band doesn't interfere with adjacent bands and a maximum attenuation which prevents interference from the adjacent bands is provided.

Then, the above-mentioned system is so constructed and optimized that the performances of the plurality of bandpass filters increase in the order of those associated with obstacle detection which requires reliability and high sensibility, train-to-ground radio communication which requires reliability, image transmission for monitoring, and detection information transmission which requires interference resistance, for example.

As mentioned above, in accordance with this embodiment 2, because the system is provided with a plurality of relay means respectively disposed for different transmissions of information, such as image transmission, train-to-ground radio transmission, obstacle detection information transmission, and detection information transmission, each of the plurality of relay means including a signal separation and combination means, the system can transmit signals by way of any one of the plurality of communication systems.

In addition, because each of the plurality of communication systems includes the plurality of signal separation and combination means 12 to 15 in order to separate or combine a signal lying within a passband, which each of the plurality of communication systems has, from or with another signal, the system of this embodiment 2 can prevent signal interference among the plurality of communication systems and can implement accurate signal transmissions.

It is to be understood that the communication system using a leakage transmission path in accordance with the present invention is not limited only to the above-mentioned examples, but is widely applicable to signal transmissions using LCXs in railway tracks, roads, power facilities, buildings, airports, and so on, and various changes and modifications can be made in the invention without departing from the spirit and scope thereof.

### Industrial Applicability

As mentioned above, the communication system using a leakage transmission path in accordance with the present invention can transmit wideband signals via multiple channels and can transmit them with accuracy by using a passband, which the leakage transmission path essentially has as a conductive line, for transmission of signals.

## Claims

1. A communication system using a leakage transmission path (3A and 3B), for sending and receiving signals lying within a passband, which a leakage transmission path essentially has as a conductive line, **characterized in that** said system comprises:
a signal generation means (4) for generating a signal to be transmitted by way of the leakage transmission path; and
a relay means (2) disposed on a way of the leakage transmission path, for relaying the signal from said generation means, and for converting the signal applied, via a cable, thereto into a signal lying within the passband, which the leakage transmission path essentially has, so as to send out it.

2. The communication system using a leakage transmission path, according to Claim 1, **characterized in that** said signal generation means is an imaging device for generating a video signal.

3. The communication system using a leakage transmission path, according to Claim 1, **characterized in that** said signal generation means generates signals respectively lying within a plurality of frequency bands and said relay means converts those signals respectively lying within the plurality of frequency bands into signals so that they have frequencies that are separately arranged in the passband which the leakage transmission path has.

4. A system using a leakage transmission path (3A and 3B) for transmission of signals and having a plurality of communication systems including a communication system using the leakage transmission path, for sending and receiving signals lying within a passband, which the leakage transmission path essentially has as a conductive line, said plurality of communication systems generating and transmitting signals respectively lying within different frequency bands, **characterized in that** said communication system comprises a signal generation means (4) for generating a signal to be transmitted by way of the leakage transmission path and a relay means (8, 12, and 14) disposed on a way of the leakage transmission path, for relaying the signal from said generation means, and for converting the signal applied, via a cable, thereto into a signal lying within the passband, which the leakage transmission path essentially has, so as to send out it, and each of said plurality of communication systems except said communication system includes a relay means ( 9 or 11, and 12 to 15) for relaying signals transmitted via the leakage transmission path.

5. The system according to Claim 4, **characterized in that** said relay means included in each of said plurality of communication systems separates or combines a signal lying within a frequency band which each of said plurality of communication systems uses from or with a signal transmitted via the leakage transmission path.
